# EUROPÄISCHE PATENTSCHRIFT

(11) **EP 1 846 345 B1**
(45) Veröffentlichungstag und Bekanntmachung des Hinweises auf die Patenterteilung: **16.12.2009**
(21) Anmeldenummer: 06706352.9
(22) Anmeldetag: 23.01.2006
(51) Int. Cl.: C04B 38/00, B01D 53/32, H01M 8/02

(54) **VERBÜNDE KERAMISCHER HOHLFASERN, VERFAHREN ZU DEREN HERSTELLUNG UND DEREN VERWENDUNG**
COMPOSITE CERAMIC HOLLOW FIBRES METHOD FOR PRODUCTION AND USE THEREOF
COMPOSITES DE FIBRES CREUSES CERAMIQUES ET PROCEDE DE FABRICATION ET D'UTILISATION DE CEUX-CI

(30) Priorität: 04.02.2005 DE 102005005464
(43) Veröffentlichungstag der Anmeldung: 24.10.2007
(73) Patentinhaber: Uhde GmbH, 44141 Dortmund (DE); Borsig Process Heat Exchanger GmbH, 13507 Berlin (DE)
(72) Erfinder: WERTH, Steffen, 42653 Solingen (DE); DINGES, Nicole, 72762 Reutlingen (DE); KILGUS, Mirjam, 72293 Glatten (DE); SCHIESTEL, Thomas, 70565 Stuttgart (DE)
(74) Vertreter: Ackermann, Joachim
(86) Internationale Anmeldenummer: PCT/EP2006/000546
(87) Internationale Veröffentlichungsnummer: WO 2006/081959

(56) Entgegenhaltungen:
- DE-A1- 4 425 209
- GB-A- 390 199
- US-A- 3 137 602
- US-A- 4 175 153
- FERNIE J A ET AL: "PROGRESS IN JOINING OF ADVANCED MATERIALS" 1. Mai 1991 (1991-05-01), WELDING AND METAL FABRICATION, IPC LTD. HAYWARDS HEATH, GB, PAGE(S) 179-180,182,18 , XP000287269 ISSN: 0043-2245 das ganze Dokument
- MALOLETOV M P ET AL: "STRESSES IN ENCIRCLING ELECTRON BEAM WELDED JOINTS BETWEEN ALUMINA-BASED CERAMICS AND METALS" WELDING INTERNATIONAL, WOODHEAD PUBLISHING LIMITED, CAMBRIDGESHIRE, GB, Bd. 7, Nr. 7, Januar 1993 (1993-01), Seiten 566-568, XP000381365 ISSN: 0950-7116
- INTRATER J: "THE CHALLENGE OF BONDING METALS TO CERAMICS" MACHINE DESIGN, PENTON MEDIA, CLEVELAND, OH, US, Bd. 61, Nr. 24, 23. November 1989 (1989-11-23), Seiten 95-100, XP000083630 ISSN: 0024-9114

## Beschreibung

Die vorliegende Erfindung betrifft Verbunde aus keramischen Hohlfasern, die sich hervorragend zur Anreicherung von Sauerstoff aus Sauerstoff enthaltendenen Fluiden oder zur Durchführung von Oxidationsreaktionen eignen.

Keramische Hohlfasern sind an sich bekannt. Deren Herstellung wird beispielsweise in der US-A-4,222,977 oder in der US-A-5,707,584 beschrieben.

S. Liu, X. Tan, K. Li und R. Hughes berichten in J. Mem.Sci. 193(2001) 249-260, über die Herstellung von keramischen Membranen und Hohlfasern aus SrCe_{0,95}Yb_{0,05}O_{2,975}. Es wurden gasdichte Hohlfasern hergestellt und deren mechanische Eigenschaften sowie deren Mikrostruktur untersucht.

In CIMTEC 2002, S. 249-258 berichtet J. Luyten über die Herstellung keramischer perowskitischer Fasern. Es werden Hohlfasern aus La_{0,6}Sr_{0,4}C0_{0,8}Fe_{0,2}O_{3-δ} beschrieben.

J. Tong, W. Yang, B. Zhu und R. Cai berichten in J. Mem.Sci. 5229(2002) 1-15 über Untersuchungen an Zirkonium dotierten keramischen Membranen des Perowskit-Typs für die Sauerstofftrennung. Es werden Membranen aus BaCo_{0,4}Fe_{0,6-x}ZtₓO_{3-δ} beschrieben.

Weitere Sauerstoff-leitende keramische Materialien sind aus den US-A-6,165,431, US-A-6,146,549, US-A-6,471,921 und US-A-6,592,782 bekannt.

Membranen aus keramischen Materialien lassen sich einerseits gasdicht herstellen, andererseits weisen ausgewählte keramische Materialien eine Sauerstoffpermeabilität auf und lassen sich daher zur Trennung von Sauerstoff aus Gasgemischen einsetzen. Mögliche Anwendungen derartiger Keramiken sind insbesondere Hochtemperaturanwendungen, wie z.B. die Gastrennung oder auch neuartige Membranreaktoren.

Der Einsatz von Sauerstoff-leitenden keramischen Membranen in Reaktoren für Oxidationsreaktionen wird beispielsweise in den US-A-6,214,757, US-A-6,033,632, und US-A-6,641,626 beschrieben.

Einen Überblick über Einsatzmöglichkeiten und Materialien für hochtemperaturionenleitende Keramiken findet sich in The Electrochemical Society Interface, Sommer 2001, S. 22-27.

Die bekannten Verfahren zur Herstellung keramischer Hohlfasern umfassen einen Spinnprozess, bei dem in einem ersten Schritt elastische Grünfasem aus einer verspinnbaren Masse enthaltend Vorläufer des keramischen Materials und Polymer hergestellt werden. Der Polymeranteil wird anschließend bei hohen Temperaturen verbrannt und es entstehen rein keramische Hohlfasern.

Beim Verspinnen erfolgt ein Phaseninversionsprozess und es resultieren im ersten Schritt in der Regel poröse Membranen. Diese können über eine kontrollierte Temperatursteuerung auch dicht gebrannt werden.

Die auf diese Weise hergestellten Fasern sind mechanisch vergleichsweise stabil; allerdings zeigen sie natürlich die für keramische Materialien typische Sprödigkeit und Bruchempfindlichkeit.

Es wurde nun überraschend gefunden, dass keramische Hohlfasern aus ausgewählten Materialien mit anderen Formteilen oder mit weiteren keramischen Hohlfasern zu komplexeren Strukturen kombiniert werden können und sich durch Sintern verbinden lassen. Dieses kann ohne den Einsatz von temporären Klebmitteln erfolgen. Es entstehen Strukturen mit deutlich höherer Stabilität, deren Handhabung, insbesondere auch im Hinblick auf Sicherheitserwägungen, wesentlich verbessert ist.

Verbunde aus anorganischen Hohlfasern sind bereits bekannt. DE 100 43 666 C1 beschreibt einen keramischen Dämmstoff, der aus einem ungeordneten Haufwerk kurzer Faserbruckstücke besteht. Diese können an den Kontaktstellen auch miteinander verbunden sein.

GB 2,022,565 A beschreibt Hohlfasern aus anorganischem Material mit porösen Wänden und mit über den Querschnitt betrachtet anisotropem Verlauf der Porenvolumina. Es werden Kombinationen von metallischen Hohlfasern offenbart, die miteinander verdrillt und nicht zusammengesintert sind.

Die vorliegende Erfindung beruht auf der überraschenden Erkenntnis, dass Vorläufer ausgewählter keramischer Materialien beim Erhitzen an den Kontaktstellen mit anderen Materialien sehr effizient zusammensintern, ohne dass dafür der Einsatz eines Hilfsmittels, wie eines Klebstoffes oder eines Schlickers, erforderlich wäre.

Aufgabe der vorliegenden Erfindung ist die Bereitstellung von Strukturen aus ein oder mehreren keramischen Hohlfasern oder aus keramischen Hohlfasern mit anderen Formteilen.

Noch eine weitere Aufgabe der vorliegenden Erfindung ist die Bereitstellung von einfachen Verfahren zur Herstellung dieser Strukturen, bei denen übliche Vorrichtungen zur Herstellung keramischer Formkörper eingesetzt werden können.

Die vorliegende Erfindung betrifft einen Verbund enthaltend mindestens eine Hohlfaser aus Sauerstoff transportierendem keramischem Material, das ein sauerstoffanionen- und elektronenleitendes keramisches Material oder eine Kombination aus sauerstoffanionenleitendem keramischem Material und aus elektronenleitendem keramischem oder nichtkeramischem Material ist, wobei die äußere Oberfläche der Hohlfaser mit der äußeren Oberfläche der gleichen Hohlfaser oder einer anderen Hohlfaser aus Sauerstoff transportierendem keramischem Material in Kontakt steht und die Kontaktstellen durch Sintern verbunden sind.

Eine weitere Ausgestaltung der vorliegenden Erfindung betrifft einen Verbund enthaltend mindestens eine Hohlfaser aus Sauerstoff transportierendem keramischem Material, das ein sauerstoffanionen- und elektronenleitendes keramisches Material oder eine Kombination aus sauerstoffanionenleitendem keramischem Material und aus elektronenleitendem keramischem oder nichtkeramischem Material ist, wobei an einer, vorzugsweise an beiden Stirnflächen der Hohlfaser ein mit dieser verbundenes Anschlusselement, vorzugsweise ein durch Sintern mit der Hohlfaser verbundenes Anschlusselement für die Zu- oder Abführung von Fluiden vorgesehen ist.

Die erfindungsgemäß eingesetzten Hohlfasern können beliebige Querschnitte aufweisen, beispielsweise eckige, ellipsenförmige oder insbesondere kreisförmige Querschnitte.

Unter Hohlfasern sind im Rahmen dieser Beschreibung Gebilde zu verstehen, die einen hohlen Innenraum aufweisen und deren äußere Dimensionen, also Durchmesser oder lineare Dimensionen beliebig sein können.

Unter dem Begriff Hohlfasern sind im Rahmen dieser Beschreibung neben der klassischen Bedeutung dieses Begriffes auch Kapillaren mit äußeren Durchmessern von 0,5 bis 5 mm sowie Rohre mit äußeren Durchmessern von mehr als 5 mm zu verstehen.

Bevorzugte äußere Durchmesser oder lineare Dimensionen der Hohlfasern bewegen sich im Bereich von bis zu 5 mm. Besonders bevorzugt eingesetzt werden Hohlfasern mit Außendurchmessern von kleiner als 3 mm.

Unter Hohlfasern sind im Rahmen dieser Beschreibung Hohlfasern mit beliebigen Längen zu verstehen. Beispiele dafür sind hohle Monofilamente oder hohle Stapelfasern (Monofilamente endlicher Länge).

In den erfindungsgemäßen Verbunden werden typischerweise keramische Hohlfasern eingesetzt, deren Länge den Außendurchmesser erheblich überschreitet. Bevorzugt eingesetzte keramische Hohlfasern weisen Verhältnisse von Länge zu Außendurchmesser auf, die mindestens 50 : 1 betragen, vorzugsweise mindestens 100 : 1 und insbesondere mindestens 200 : 1.

Die erfindungsgemäßen Verbunde stellen Gebilde mit vorbestimmter geometrischer Form dar (im Gegensatz zu Ansammlungen von Hohlfasern in ungeordneten Haufwerken mit statistischer Ausrichtung), die durch Zusammenfügen von mindestens einer, vorzugsweise von mehreren Hohlfasern zu einem Verbund entstanden sind, wobei dieser Verbund mindestens einen durch das innere Volumen der Hohlfasern gebildeten Innenraum und mindestens einen durch das die Hohlfasern umgebende Volumen gebildeten Außenraum aufweist. Der Verbund ist typischerweise so ausgestaltet, dass der Innenraum von einem Fluid durchströmt werden kann, das sich während der Passage durch den Innenraum mit Sauerstoff abreichem kann, wobei der Sauerstoff durch die Wände der keramischen Hohlfasern in den Außenraum transportiert wird. Es sind auch Anordnungen möglich, in denen der Transport des Sauerstoffs in umgekehrter Richtung erfolgt.

Die erfindungsgemäßen Verbunde können beliebige Kombinationen von keramischen Hohlfasern aus Sauerstoff transportierendem keramischen Material darstellen.

So lassen sich beispielsweise die folgenden Verbunde herstellen:
- mehrere Hohlfasern in Längskontakt angeordnet in einer Ebene
- mehrere Hohlfasern geflochten oder miteinander verdrillt
- mehrere Hohlfasern zu einem Monolith kombiniert (Multikanalelement aus Hohlfasern)

Durch die Flexibilität und Elastizität der Grünfasem, bei denen der Anteil der keramischen (Vorläufer)phase nicht zu hoch ist, sind viele weitere Geometrien möglich. Die Fasern behalten durch diese Strukturgebung ihre ursprüngliche Funktionalität (d.h. die Gaspermeabilität für Sauerstoffleitung).

Solche Verbunde können dann weiter zu Membranmodulen zusammengefügt werden. Diese Systeme sind insbesondere zum Einsatz bei Hochtemperaturanwendungen geeignet, wie z.B. in der Gastrennung oder auch als Komponenten von Membranreaktoren.

Die erfindungsgemäß eingesetzten Hohlfasern lassen sich durch einen an sich bekannten Spinnprozess herstellen. Dabei kann es sich um ein Lösungsspinnverfahren, wie Trocken- oder Naßspinnen, handeln oder um ein Schmelzspinnverfahren.

Die zu verspinnende Masse umfaßt neben dem feinteiligen keramischen Material oder dessen Vorläufer ein verspinnbares Polymer.

Der Gehalt an verspinnbarem Polymer in der zu verspinnenden Masse kann in weiten Bereichen schwanken, beträgt jedoch typischerweise 2 bis 30 Gew. %, vorzugsweise von 5 bis 10 Gew. %, bezogen auf die gesamte zu verspinnende Masse oder Spinnlösung.

Der Gehalt an feinteiligem keramischen Material oder an dessen Vorläufer in der zu verspinnenden Masse kann ebenfalls in weiten Bereichen schwanken, beträgt jedoch typischerweise 20 bis 90 Gew. %, vorzugsweise von 40 bis 60 Gew. %, bezogen auf die gesamte zu verspinnende Masse oder Spinnlösung.

Der Gehalt an Lösungsmittel in der zu verspinnenden Masse kann in weiten Bereichen schwanken, beträgt jedoch typischerweise 10 bis 80 Gew. %, vorzugsweise von 35 bis 45 Gew. %, bezogen auf die gesamte Spinnlösung.

Art und Menge von verspinnbarem Polymer und feinteiligem keramischem Material oder dessen Vorläufer werden vorzugsweise so gewählt, dass gerade noch verspinnbare Massen erhalten werden, wobei der Gehalt an verspinnbarem Polymer möglichst niedrig zu wählen ist.

Das Verspinnen erfolgt durch Extrudieren der Spinnlösung oder der erhitzten und plastifizierten Spinnmasse durch eine Ringdüse, gefolgt von Abkühlen in Luft und/oder Einbringen in ein Fällbad, das ein für das in der Spinnmasse eingesetzte Polymer Nichtlösemittel enthält.

Danach kann die erhaltene grüne Hohlfaser weiteren Bearbeitungsschritten unterzogen werden, beispielsweise Schneiden zu Stapeln oder Aufwickeln zur Zwischenlagerung.

In einem sich an die Ausformung anschließenden Verarbeitungsschritt wird die erhaltene grüne Hohlfaser zu dem gewünschten Verbund kombiniert.

Dabei kann es sich um die Kombination mehrerer gleicher oder auch unterschiedlicher grüner Hohlfasern handeln oder auch um die Kombination von ein oder mehreren grünen Hohlfasern an deren Stirnflächen mit mindestens einem Anschlußelement für die Zu- oder Abführung von Fluiden, wie Flüssigkeiten oder insbesondere von Gasen.

Die Kombination der grünen Hohlfasern kann durch beliebige Techniken erfolgen. Beispiele dafür sind die manuelle Kombination, wie das Nebeneinanderlegen von parallel zueinander verlaufenden Hohlfasern, aber auch textile flächenbildende Techniken, wie das Herstellen von Gestricken, Geweben, Gelegen, Gewirken, Geflechten oder von verdrillten Gebilden.

Nach der Herstellung des Verbundes der grünen Hohlfaser(n) wird das Polymer in an sich bekannter Weise durch thermische Behandlung entfernt. Dieser Schritt umfasst auch das Ausbilden einer Keramik aus dem Vorläufer für das keramische Material und/oder ein Zusammensintern der feinteiligen keramischen Teilchen. Durch die Auswahl der Behandlungsparameter, wie Temperaturprogramm und Atmosphäre, lassen sich die Eigenschaften der entstehenden Keramik in der dem Fachmann bekannten Weise steuern.

In den erfindungsgemäßen Verbunden enthaltene Hohlfasern bestehen aus Sauerstoff transportierendem keramischem Material. Derartige Materialien sind an sich bekannt.

Typische Werte für den Sauerstoff Transport der erfindungsgemäßen Verbunde sind Sauerstoff-Flüsse von mindestens 0,01 Ncm³ / (min * cm²), vorzugsweise von mindestens 0,1 Ncm³ / (min * cm²), gemessen als Mittelwert über die gesamte Oberfläche des betrachteten Verbundes. Dabei bedeutet Ncm³ Normkubikzentimeter (bei 1 bar und 25°C). Die angegebenen Werte für den Sauerstoff-Fluss werden für die Zwecke dieser Beschreibung bei 950°C und einem Sauerstoff-Partialdruckunterschied zwischen beiden freien Gasphasen von 0,2 bar ermittelt, wobei der höhere Sauerstoffpartialdruck 0,2 bar beträgt.

Diese Keramiken können aus Sauerstoffanionen- und Elektronenleitenden Materialien bestehen. Es können aber auch Kombinationen unterschiedlichster Keramiken oder von keramischen und nicht-keramischen Materialien eingesetzt werden, beispielsweise Kombinationen von Sauerstoffanionen-leitenden Keramiken und Elektronen-leitenden Keramiken oder Kombinationen unterschiedlicher Keramiken, die jeweils Sauerstoffanionen und Elektronen leiten oder von denen nicht alle Komponenten eine Sauerstoffleitung aufweisen oder Kombinationen von Sauerstoffleitenden keramischen Materialien mit nicht-keramischen Materialien, wie Metallen.

Beispiele für bevorzugte mehrphasige Membransysteme sind Mischungen aus Keramik mit lonenleitfähigkeit und einem weiteren Material mit Elektronenleitfähigkeit, insbesondere einem Metall. Dazu zählen insbesondere Kombinationen von Materialien mit Fluoritstrukturen oder Fluorit-verwandten Strukturen mit elektronenleitenden Materialien, z.B. Kombinationen von ZrO₂ oder CeO₂, die gegebenenfalls mit CaO oder Y₂O₃ dotiert sind mit Metallen, wie mit Palladium.

Weitere Beispiele für bevorzugte mehrphasige Membransysteme sind Mischstrukturen mit teilweiser Perowskit-Struktur, d.h. Mischsysteme, von denen im Feststoff verschiedene Kristallstrukturen vorliegen, und wenigstens eine davon eine Perowskitstruktur oder eine mit Perowskit verwandte Struktur ist.

Bevorzugt eingesetzte Sauerstoff-transportierende Materialien sind Oxidkeramiken, von denen solche mit Perowskitstruktur oder mit Brownmilleritstruktur oder mit Aurivilliusstruktur besonders bevorzugt sind.

Erfindungsgemäß eingesetzte Perowskite weisen vorzugsweise die Struktur ABO_{3-δ} auf, wobei A zweiwertige Kationen und B drei- oder höherwertige Kationen darstellen, der Ionenradius von A größer als der Ionenradius vom B ist und δ eine Zahl zwischen 0,001 und 1,5, vorzugsweise zwischen 0,01 und 0,9 und besonders bevorzugt zwischen 0,01 und 0,5 ist, um die Elektroneutralität des Materials herzustellen. In den erfindungsgemäß eingesetzten Perowskiten können auch Gemische unterschiedlicher Kationen A und/oder Kationen B vorliegen.

Erfindungsgemäß eingesetzte Brownmillerite weisen typischerweise die Struktur A₂B₂O_{5-δ} auf, wobei A, B und δ die oben definierten Bedeutungen besitzen. Auch in den erfindungsgemäß eingesetzten Brownmilleriten können Gemische unterschiedlicher Kationen A und/oder Kationen B vorliegen.

Kationen B können vorzugsweise in mehreren Oxidationsstufen auftreten. Ein Teil oder auch alle Kationen des Typs B können jedoch auch drei- oder höherwertige Kationen mit konstanter Oxidationsstufe sein.

Besonders bevorzugt eingesetzte Oxidkeramiken enthalten Kationen des Typs A, die ausgewählt werden aus Kationen der zweiten Hauptgruppe, der ersten Nebengruppe, der zweiten Nebengruppe, der Lanthaniden Gruppe oder Mischungen dieser Kationen, vorzugsweise aus Mg²⁺, Ca²⁺, Sr²⁺, Ba²⁺, Cu²⁺, Ag²⁺, Zn²⁺, Cd²⁺ und/oder der Lantaniden.

Besonders bevorzugt eingesetzte Oxidkeramiken enthalten Kationen des Typs B, die ausgewählt werden aus Kationen der Gruppen IIIB bis VIIIB des Periodensystems und/oder der Lanthaniden Gruppe, der Metalle der dritten bis fünften Hauptgruppe oder Mischungen dieser Kationen, vorzugsweise aus Fe³⁺, Fe^{4+,} Ti³⁺, Ti⁴⁺, Zr³⁺, Zr⁴⁺, Ce³⁺, Ce⁴⁺, Mn³⁺, Mn⁴⁺, Co²⁺, Co³⁺, Nd³⁺, Nd⁴⁺, Gd³⁺, Gd⁴⁺, Sm³⁺, Sm⁴⁺, Dy³⁺, Dy⁴⁺, Ga³⁺, Yb³⁺, Al³⁺, Bi⁴⁺ oder Mischungen dieser Kationen.

Noch weitere besonders bevorzugt eingesetzte Oxidkeramiken enthalten Kationen des Typs B, die ausgewählt werden aus Sn²⁺, Pb²⁺, Ni²⁺, Pd²⁺, Lanthaniden oder Mischungen dieser Kationen.

Erfindungsgemäß eingesetzte Aurivillite weisen typischerweise das Strukturelement (Bi₂O₂)²⁺ (VO_{3,5}[ ]_{0,5})²⁻ oder verwandte Strukturelemente auf, wobei [ ] eine Sauerstoff-Fehlstelle bedeutet.

Ganz besonders bevorzugt werden Verbunde, deren Sauerstoff transportierende Oxidkeramik mit Perowskitstruktur die Elemente Ba, Sr, Fe, Zn und O oder die Elemente Ba, Co, Fe, Zr und O aufweist, insbesondere die Zusammensetzung BaCoₓFeyZr_{z}O_{3-δ} aufweist, wobei die Summe von x, y und z 1 ergibt, z einen Wert zwischen 0,1 und 0,5 annimmt, x einen Wert im Bereich von a*y besitzt, a einen Wert zwischen 0,8 und 1,2 annimmt und δ die oben definierte Bedeutung besitzt.

Die Erfindung betrifft auch ein Verfahren zur Herstellung der oben beschriebenen Verbunde umfassend die Maßnahmen:
i) Herstellung einer grünen Hohlfaser durch Extrudieren einer Zusammensetzung enthaltend neben einem Polymer eine Keramik, insbesondere eine Oxidkeramik, oder einen Vorläufer für eine Keramik durch eine Düse, vorzugsweise eine Ringdüse, in an sich bekannter Weise,
ii) Erzeugen eines grünen Verbundes aus einer oder mehreren der in Schritt i) hergestellten grünen Hohlfasern durch Herstellung von Kontakten zwischen der oder den äußeren Oberfläche(n) der grünen Hohlfaser(n), und
iii) thermische Behandlung des in Schritt ii) erzeugten grünen Verbundes, um das Polymer zu entfernen, im Falle des Einsatzes eines Vorläufers für eine Keramik in Schritt i) die Keramik auszubilden und den Kontakt zwischen den keramischen Hohlfasern auszubilden.

In einer weiteren Ausgestaltung betrifft die Erfindung ein Verfahren zur Herstellung des oben definierten Verbundes umfassend die Maßnahmen:
i) Herstellung einer grünen Hohlfaser durch Extrudieren einer Zusammensetzung enthaltend neben einem Polymer eine Keramik, insbesondere eine Oxidkeramik, oder einen Vorläufer für eine Keramik durch eine Düse, vorzugsweise eine Ringdüse, in an sich bekannter Weise,
iv) Erzeugen eines grünen Verbundes aus einer oder mehreren der in Schritt i) hergestellten grünen Hohlfasern und mindestens einem Anschlußelement für die Zu- oder Abführung von Fluiden an mindestens einer Stirnfläche der grünen Hohlfasern, und
v) thermische Behandlung des in Schritt iv) erzeugten grünen Verbundes, um das Polymer zu entfernen, und den Kontakt zwischen den keramischen Hohlfasern und dem mindestens einen Anschlusselement sowie im Falle des Einsatzes eines Vorläufers für eine Keramik in Schritt

i) die Keramik, insbesondere die Oxidkeramik auszubilden.

Außendurchmesser (Dₐ) und Innendurchmesser (Dᵢ) der erfindungsgemäß hergestellten Hohlfasern können in weiten Bereichen schwanken. Beispiele für Dₐ sind 0,1 bis 5 mm, insbesondere 0,5 bis 3 mm. Beispiele für Dᵢ sind 0,01 bis 4,5 mm, insbesondere 0,4 bis 2,8 mm.

Besonders bevorzugt werden Hohlfasern in Form von Monofilamenten hergestellt, deren Querschnittsform rund, oval oder n-eckig ist, wobei n größer gleich 3 ist.

Bei nichtrunden Faserquerschnitten ist unter Dₐ die größte Dimension des äußeren Querschnitts und unter Dᵢ die größte Dimension des inneren Querschnitts zu verstehen.

Zur Herstellung der erfindungsgemäß eingesetzten Hohlfasern können die für die Herstellung keramischer Fasern an sich bekannten Polymere verwendet werden. Dabei kann es sich grundsätzlich um jedes aus der Schmelze oder aus Lösung verspinnbare Polymer handeln. Beispiele dafür sind Polyester, Polyamide, Polysulfone, Polyarylensulfide, Polyethersulfone und Cellulose.

Zur Herstellung der erfindungsgemäß eingesetzten Hohlfasern können die für die Herstellung keramischer Fasern an sich bekannten keramischen Massen, die eine Leitfähigkeit für Sauerstoff aufweisen, oder Vorläufer davon verwendet werden. Beispiele für Sauerstoff-leitende keramische Massen sind bereits weiter oben erwähnt worden. Bei den Vorläufern dieser keramischen Massen kann es sich beispielsweise um Gemische handeln, die bei der Formgebung noch nicht- oder teilkristallin vorliegen und die erst beim Sintern der Formen in die gewünschte Kristallstruktur übergehen.

Nach dem Verpressen der Spinnmasse durch eine Spinndüse wird die grüne Hohlfaser in ein Fällbad oder Kühlbad eingetragen, vorzugsweise in ein Wasserbad, und anschließend aufgewickelt.

Die Abzugsgeschwindigkeit beträgt üblicherweise 1 bis 100 m pro Minute, vorzugsweise 5 bis 20 m/min.

Die grünen Hohlfasern können neben den keramischen Materialien oder deren Vorläufern und den Polymeren noch weitere Hilfsstoffe enthalten. Beispiele dafür sind Stabilisatoren für den Schlicker, wie Polyvinylalkohol, Polyethylenglykol, Tenside, Ethylendiamintetraessigsäure oder Citronensäure, Zusätze zur Einstellung der Viskosität des Schlickers, wie Polyvinylpyrrolidon, oder Salze als Quellen für Kationen zum Dotieren der Keramik.

Nach der Herstellung der grünen Hohlfasern werden diese in der oben beschriebenen Weise zu Verbunden kombiniert, also mit anderen grünen Hohlfasern und/oder mit Zu- und Ableitungen für Fluide. Die Zu- und Ableitungen können Formkörper aus Metallen, Keramiken oder Vorläufern von Keramiken sein.

Anschließend werden die grünen Verbunde getempert. Dieses kann an der Luft oder in Schutzgasatmosphäre erfolgen. Temperaturprogramm und Sinterzeiten sind an den Einzelfall anzupassen. Dem Fachmann sind die einzustellenden Parameter dafür bekannt. Der Temperschritt führt zu einem Verdichten des grünen Vorläufers. Einerseits verschwindet das Polymer und andererseits schließen sich durch geeignet gewählte Temperbedingungen die Poren der entstehenden Keramik, so das gasdichte Verbunde erhalten werden.

Anstelle der Kombination der grünen Verbunde mit Zu- und Ableitungen für Fluide kann der fertige Verbund aus keramischen Hohlfasern mit Zu- und Ableitungen für Fluide verklebt werden, beispielsweise unter Verwendung eines keramischen Klebers.

Die erfindungsgemäßen Verbunde lassen sich auf allen industriellen Gebieten einsetzen. Bevorzugt kommen sie bei Anwendungen zum Einsatz, in denen in heißen und/oder aggressiven Umgebungen Oxidationsreaktionen durchgeführt werden oder in denen Sauerstoff aus Gasgemischen abgetrennt werden müssen.

Die Erfindung betrifft die Verwendung der oben beschriebenen Verbunde zur Gewinnung von Sauerstoff aus Sauerstoff enthaltenden Gasgemischen, insbesondere aus Luft.

Ferner betrifft die Erfindung die Verwendung der oben beschriebenen Verbunde zur Durchführung von Oxidationsreaktionen, insbesondere zur katalytischen Oxidation organischer Verbindungen.

Die nachfolgenden Beispiele erläutern die Erfindung ohne diese zu begrenzen. Prozentangaben beziehen sich auf das Gewicht, sofern nichts anderes angegeben ist.

### Beispiel 1: Herstellung einer grünen Hohlfaser

Ein keramisches Pulvers der Zusammensetzung BaCo_{0,4}Fe_{0,4}Zr_{0.2}O_{3-δ} wurden mit Polysulfon (UDEL P-3500, Solvay und 1-Methyl-2-pyrrolidon (NMP) (≥ 99,0%, Merck) zu einem Schlicker verrührt. Dieser wurde anschließend in einer Kugelmühle homogenisiert.

Die auf diese Weise erhaltene Spinnmasse wurde durch eine Hohlkerndüse mit Außendurchmesser (Dₐ) 1,7 mm und Innendurchmesser (Dᵢ) 1,2 mm versponnen. Dazu wurde die Spinnmasse in einen Druckbehälter eingefüllt und mit Stickstoff unter Druck gesetzt. Nach Öffnen des Hahns am Druckbehälter floß die Spinnmasse heraus und wurde durch die Hohlkerndüse verpreßt. Der Grünfaserstrang wurde durch ein Fäll-Wasserbad geleitet und anschließend getrocknet.

### Beispiel 2: Herstellung eines Verbundes aus keramischen Hohlfasern

Mehrere nach Beispiel 1 hergestellte Hohlfasern wurden parallel zueinander angeordnet, so daß sich sich jeweils entlang ihrer Außenmäntel berührten.

Dieser Verbund aus grünen Hohlfasern wurde in einem Ofen hängend gesintert.

**Das Sintern erfolgte nach folgendem Temperaturprogramm:**

| | | |
|---|---|---|
| ○ | 96°C/h | 500 °C (1 h Halten) |
| ○ | 120°C/h | 1000 °C |
| ○ | 60°C/h | 1300 °C (6 h Halten) |
| ○ | 120°C/h | 800 °C |
| ○ | 180°C/h | 80 °C |

Nach dem Sintern wurde ein zusammenhängender Verbund aus einzelnen Hohlfasern erhalten. Die einzelnen Hohlfasern besaßen eine Länge von 30 - 35 cm, sowie Durchmesser Dₐ von 0,8 - 0,9 mm und Dᵢ von 0,5 - 0,6 mm.

Die gemäß Beispiel 2 hergestellten Hohlfasern wiesen eine für Sauerstoff selektive Permeabilität auf.

### Beispiel 3: Herstellung eines weiteren Verbundes aus keramischen Hohlfasern

Mehrere nach Beispiel 1 hergestellte Hohlfasern wurden manuell miteinander verflochten und nach der in Beispiel 2 beschriebenen Methode thermisch behandelt.

Nach dem Sintern wurde ein zusammenhängendes Geflecht aus einzelnen Hohlfasern erhalten.

Die gemäß Beispiel 3 hergestellten Hohlfasern wiesen eine für Sauerstoff selektive Permeabilität auf.

### Beispiel 4: Herstellung eines weiteren Verbundes aus keramischen Hohlfasern

Mehrere nach Beispiel 1 hergestellte Hohlfasern wurden auf der Oberfläche einer stabförmigen Form manuell so miteinander kombiniert, dass diese sich als rohrförmiges Multikanalelement anordneten, dessen einzelne Kapillaren parallel zueinander verlaufende Hohlfasern waren.

Das erhaltene grüne Mulikanalelement wurde nach der in Beispiel 2 beschriebenen Methode thermisch behandelt.

Der Innenraum des Multikanalelements war nach dem Sintern und Entfernen der stabförmigen Form leer. Es wurde ein Multikanalelement aus parallel zueinander verlaufenden und zusammengesinterten Hohlfasern erhalten, die eine für Sauerstoff selektive Permeabilität aufwiesen.

### Beispiel 5: Herstellung eines weiteren Verbundes aus keramischen Hohlfasern

Mehrere nach Beispiel 1 hergestellte Hohlfasern wurden entlang der Oberfläche einer stabförmigen Form gewickelt, so dass diese sich als helixförmiges Multikanalelement anordneten, dessen einzelne Kapillaren sich entlang der Wendel einander berührten.

Das erhaltene grüne Mulikanalelement wurde nach der in Beispiel 2 beschriebenen Methode thermisch behandelt.

Der Innenraum des Multikanalelements war nach dem Sintern und Entfernen der stabförmigen Form leer. Es wurde ein Multikanalelement aus parallel und helixförmig zueinander verlaufenden, zusammengesinterten Hohlfasern erhalten, die eine eine für Sauerstoff selektive Permeabilität aufwiesen.

### Beispiel 6: Herstellung eines Verbundes aus keramischen Hohlfasern mit Anschlußelementen für die Zu- und Abführung von Gasen

Mehrere nach Beispiel 1 hergestellte Hohlfasern wurden manuell so miteinander kombiniert, dass diese sich in Form eines Multikanalelements anordneten, dessen einzelne Kapillaren parallel zueinander verlaufende Hohlfasern waren. Der Innenraum des Multikanalelements war im Querschnitt betrachtet vollständig mit Hohlfasern ausgefüllt.

An beiden Stirnseiten des grünen Multikanalelements wurden metallische Anschlußelemente für die Zu- und Ableitung von Gasen aufgesetzt.

Der erhaltene grüne Verbund wurde nach der in Beispiel 2 beschriebenen Methode thermisch behandelt.

Nach dem Sintern wurde ein Multikanalelement aus parallel zueinander verlaufenden und zusammengesinterten Hohlfasern erhalten, die eine für Sauerstoff selektive Permeabilität aufwiesen. Dieses Multikanalelement war an beiden Stirnseiten mit den metallischen Anschlußelementen durch Sintern fest verbunden.

### Beispiel 7: Herstellung eines Verbundes aus keramischen Hohlfasern mit Anschlußelementen für die Zu- und Abführung von Gasen

Es wurde wie in Beispiel 6 beschrieben gearbeitet mit der Abänderung, dass auf das grüne Multikanalelement keine metallischen Anschlusselemente für die Zu- und Ableitung von Gasen gesetzt wurden. Nach dem Sintern des keramischen Multikanalelements wurden zwei Anschlusselemente mit Hilfe eines keramischen Klebers mit beiden Stirnflächen der keramischen Hohlfasern verbunden. Dieser Verbund wurde anschließend bei 100°C getempert und es wurde ein Multikanalelement erhalten, auf dessen beiden Stirnseiten metallische Anschlusselemente angebracht waren.

## Patentansprüche

1. Verbund enthaltend mindestens eine Hohlfaser aus Sauerstoff transportierendem keramischem Material, das ein sauerstoffanionen- und elektronenleitendes keramisches Material oder eine Kombination aus sauerstoffanionenleitendem keramischem Material und aus elektronenleitendem keramischem oder nichtkeramischem Material ist, wobei die äußere Oberfläche der Hohlfaser mit der äußeren Oberfläche der gleichen Hohlfaser oder einer anderen Hohlfaser aus Sauerstoff transportierendem keramischem Material in Kontakt steht und die Kontaktstellen durch Sintern verbunden sind.

2. Verbund enthaltend mindestens eine Hohlfaser aus Sauerstoff transportierendem keramischem Material, das ein sauerstoffanionen- und elektronenleitendes keramisches Material oder eine Kombination aus sauerstoffanionenleitendem keramischem Material und aus elektronenleitendem keramischem oder nichtkeramischem Material ist, wobei an mindestens einer, vorzugsweise an beiden Stirnflächen der Hohlfaser ein oder zwei Anschlusselemente für die Zu- oder Abführung von Fluiden vorgesehen sind.

3. Verbund nach einem der Ansprüche 1 oder 2, **dadurch gekennzeichnet, dass** dieser mehrere miteinander verflochtene oder verdrillte Hohlfasern aufweist.

4. Verbund nach einem der Ansprüche 1 oder 2, **dadurch gekennzeichnet, dass** dieser mindestens zwei parallel zueinander verlaufende Hohlfasern aus Sauerstoff transportierendem keramischem Material aufweist, deren Außenmäntel sich zumindest teilweise entlang ihrer Länge berühren.

5. Verbund nach Anspruch 4, **dadurch gekennzeichnet, dass** dieser mehrere in Form eines rohrförmigen Multikanalelements angeordnete und parallel zueinander verlaufende Hohlfasern oder Rohre aufweist, deren Außenmäntel sich zumindest teilweise entlang ihrer Länge berühren.

6. Verbund nach Anspruch 5, **dadurch gekennzeichnet, dass** die Hohlfasern oder Rohre den Mantel eines rohrförmigen Multikanalelements ausbilden, dessen Innenraum hohl ist oder ein stabförmiges Verstärkungsmaterial aufweist.

7. Verbund nach Anspruch 6, **dadurch gekennzeichnet, dass** die Hohlfasern oder Rohre entlang der Innenseite eines Rohres aus gasdichtern oder porösem Material verlaufen.

8. Verbund nach Anspruch 6, **dadurch gekennzeichnet, dass** der hohle Innenraum des rohrförmigen Multikanalelements einen Oxidationskatalysator aufweist.

9. Verbund nach einem der Ansprüche 1 oder 2, **dadurch gekennzeichnet, dass** dieser ein oder mehrere Hohlfasern aufweist, die miteinander verwoben, verwirkt oder verstrickt sind.

10. Verbund nach einem der Ansprüche 1 oder 2, **dadurch gekennzeichnet, dass** das Sauerstoff-transportierende keramische Material eine Oxidkeramik ist.

11. Verbund nach Anspruch 10, **dadurch gekennzeichnet, dass** die Oxidkeramik eine Perowskitstruktur oder eine Brownmilleritstruktur oder eine Aurivilliusstruktur aufweist,

12. Verbund nach Anspruch 11, **dadurch gekennzeichnet, dass** die Oxidkeramik eine Perowskitstruktur ABO_{3-δ} aufweist, wobei A zweiwertige Kationen und B drei- oder höherwertige Kationen darstellen, der Ionenradius von A größer als der Ionenradius vom B ist und δ eine Zahl zwischen 0,01 und 0,9, vorzugsweise zwischen 0,01 und 0,5 ist, um die Elektroneutralität des Materials herzustellen und wobei A und/oder B als Gemische unterschiedlicher Kationen vorliegen können.

13. Verbund nach Anspruch 11, **dadurch gekennzeichnet, dass** die Oxidkeramik eine Brownmilleritstruktur A₂B₂O_{5-δ} aufweist, wobei A zweiwertige Kationen und B drei- oder höherwertige Kationen darstellen, der Ionenradius von A größer als der Ionenradius vom B ist und δ eine Zahl zwischen 0,01 und 0,9, vorzugsweise zwischen 0,01 und 0,5 ist, um die Elektroneutralität des Materials herzustellen und wobei A und/oder B als Gemische unterschiedlicher Kationen vorliegen können.

14. Verbund nach Anspruch 12 oder 13, **dadurch gekennzeichnet, dass** die Kationen des Typs A ausgewählt werden aus Kationen der zweiten Hauptgruppe, der ersten Nebengruppe, der zweiten Nebengruppe, der Lanthaniden Gruppe oder Mischungen dieser Kationen, vorzugsweise aus Mg²⁺, Ca²⁺, Sr²⁺, Ba²⁺, Cu²⁺, Ag²⁺, Zn²⁺, Cd²⁺ und/oder Lantaniden.

15. Verbund nach Anspruch 12 oder 13, **dadurch gekennzeichnet, dass** die Kationen des Typs B ausgewählt werden aus Kationen der Gruppen IIIB bis VIIIB des Periodensystems und/oder der Lanthaniden Gruppe, der Metalle der fünften Hauptgruppe oder Mischungen dieser Kationen, vorzugsweise aus Fe³⁺, Fe⁴⁺, Ti³⁺, Ti⁴⁺, Zr³⁺, Zr⁴⁺, Ce³⁺, Ce⁴⁺, Mn³⁺, Mn⁴⁺, Co²⁺, Co³⁺, Nd³⁺, Nd⁴⁺, Gd³⁺, Gd⁴⁺, Sm³⁺, Sm⁴⁺, Dy³⁺, Dy⁴⁺, Ga³⁺, Yb³⁺, Al³⁺, Bi⁴⁺ oder Mischungen dieser Kationen.

16. Verbund nach Anspruch 12, **dadurch gekennzeichnet, dass** die Sauerstoff transportierende Oxidkeramik mit Perowskitstruktur die Elemente Ba, Sr, Fe, Zn und O oder die Elemente Ba, Co, Fe, Zr und O aufweist, vorzugsweise die Zusammensetzung BaCoₓFe_{y}Zr_{z}O_{3-δ} aufweist, wobei die Summe von x, y und z 1 ergibt, z einen Wert zwischen 0,1 und 0,5 annimmt, x einen Wert im Bereich von a*y besitzt, a einen Wert zwischen 0,8 und 1,2 annimmt und δ die in Anspruch 12 definierte Bedeutung besitzt.

17. Verfahren zur Herstellung des Verbundes nach Anspruch 1 umfassend die Maßnahmen:
i) Herstellung einer grünen Hohlfaser durch Extrudieren einer Zusammensetzung enthaltend neben einem Polymer eine Keramik, insbesondere eine Oxidkeramik, oder einen Vorläufer für eine Keramik durch eine Düse, vorzugsweise eine Ringdüse, in an sich bekannter Weise,
ii) Erzeugen eines grünen Verbundes aus einer oder mehreren der in Schritt i) hergestellten grünen Hohlfasern durch Herstellung von Kontakten zwischen der oder den äußeren Oberfläche(n) der grünen Hohlfaser(n), und
iii) thermische Behandlung des in Schritt ii) erzeugten grünen Verbundes, um das Polymer zu entfernen, im Falle des Einsatzes eines Vorläufers für eine Keramik in Schritt i) die Keramik auszubilden und den Kontakt zwischen den keramischen Hohlfasern auszubilden.

18. Verfahren nach Anspruch 17, **dadurch gekennzeichnet, dass** das Extrudieren nach dem Trockenspinnverfahren, dem Naßspinnverfahren oder dem Schmelzspinnverfahren erfolgt.

19. Verfahren nach Anspruch 17, **dadurch gekennzeichnet, dass** das Erzeugen des Verbundes durch Flechten, Drillen, Weben, Wirken, Stricken der grünen Hohlfaser(n) oder durch Legen von parallel zueinander verlaufenden grünen Hohlfasern erfolgt.

20. Verfahren nach Anspruch 19, **dadurch gekennzeichnet, dass** die grünen Hohlfasern um ein stabförmiges Verstärkungselement oder um ein Rohr angeordnet werden.

21. Verfahren nach Anspruch 17, **dadurch gekennzeichnet, dass** die thermische Behandlung des in Schritt ii) erzeugten grünen Verbundes bei Temperaturen im Bereich von 900 bis 1600°C erfolgt.

22. Verfahren nach Anspruch 17, **dadurch gekennzeichnet, dass** der nach Schritt iii) erzeugte Verbund an mindestens einer Stirnfläche der Hohlfaser mit mindestens einem Anschlusselement for die Zu- oder Abführung von Fluiden verbunden wird, vorzugsweise verklebt wird.

23. Verfahren zur Herstellung des Verbundes nach Anspruch 2 umfassend die Maßnahmen:
i) Herstellung einer grünen Hohlfaser durch Extrudieren einer Zusammensetzung enthaltend neben einem Polymer eine Keramik, insbesondere eine Oxidkeramik, oder einen Vorläufer für eine Keramik durch eine Düse, vorzugsweise eine Ringdüse, in an sich bekannter Weise,
iv) Erzeugen eines grünen Verbundes aus einer oder mehreren der in Schritt i) hergestellten grünen Hohlfasern und mindestens einem Anschlußelement für die Zu- oder Abführung von Fluiden an mindestens einer Stirnfläche der grünen Hohlfasern, und
v) thermische Behandlung des in Schritt iv) erzeugten grünen Verbundes, um das Polymer zu entfernen, und den Kontakt zwischen den keramischen Hohlfasern und dem mindestens einen Anschlusselement sowie im Falle des Einsatzes eines Vorläufers für eine Keramik in Schritt i) die Keramik, insbesondere die Oxidkeramik auszubilden.

24. Verwendung des Verbundes nach einem der Ansprüche 1 bis 16 zur Gewinnung von Sauerstoff aus Sauerstoff enthaltenden Gasgemischen, insbesondere aus Luft.

25. Verwendung des Verbundes nach einem der Ansprüche 1 bis 16 zur Durchführung von Oxidationsreaktionen, insbesondere zur katalytischen Oxidation organischer Verbindungen.

## Claims

1. Composite comprising at least one hollow fibre of oxygen-transporting ceramic material, which is a ceramic material which conducts oxygen anions and electrons or a combination of ceramic material which conducts oxygen anions and a ceramic or nonceramic material which conducts electrons, with the outer surface of the hollow fibre being in contact with the outer surface of the same hollow fibre or another hollow fibre of oxygen-transporting ceramic material and the contact points being joined by sintering.

2. Composite comprising at least one hollow fibre of oxygen-transporting ceramic material which is a ceramic material which conducts oxygen anions and electrons or a combination of ceramic material which conducts oxygen anions and ceramic or nonceramic material which conducts electrons, with one or two connection elements for the introduction or discharge of fluids being provided at at least one end face, preferably both end faces, of the hollow fibres.

3. Composite according to either Claim 1 or 2,
**characterized in that** it comprises a plurality of hollow fibres which have been braided or twisted together.

4. Composite according to either Claim 1 or 2,
**characterized in that** it comprises at least two hollow fibres which are composed of oxygen-transporting ceramic material and run parallel to one another and whose outer walls are in contact along at least part of their length.

5. Composite according to Claim 4, **characterized in that** it comprises a plurality of parallel hollow fibres or tubes which are arranged in the form of a tubular multichannel element and whose outer walls are in contact along at least part of their length.

6. Composite according to Claim 5, **characterized in that** the hollow fibres or tubes form the outer wall of a tubular multichannel element whose interior space is hollow or comprises a rod-shaped reinforcing material.

7. Composite according to Claim 6, **characterized in that** the hollow fibres or tubes run parallel along the inside of a tube composed of gastight or porous material.

8. Composite according to Claim 6, **characterized in that** the hollow interior space of the tubular multichannel element comprises an oxidation catalyst.

9. Composite according to either Claim 1 or 2,
**characterized in that** it comprises one or more hollow fibres which are woven, formed-loop knitted or drawn-loop knitted with one another.

10. Composite according to either Claim 1 or 2,
**characterized in that** the oxygen-transporting ceramic material is an oxide ceramic.

11. Composite according to Claim 10, **characterized in that** the oxide ceramic has a perovskite structure or a brownmillerite structure or a aurivillite structure.

12. Composite according to Claim 11, **characterized in that** the oxide ceramic has a perovskite structure ABO_{3-δ}, where A is a divalent cation and B is a trivalent or higher-valent cation, the ionic radius of A is greater than the ionic radius of B and δ is from 0.01 to 0.9, preferably from 0.01 to 0.5 so as to make the material electrically neutral and A and/or B can be present as mixtures of different cations.

13. Composite according to Claim 11, **characterized in that** the oxide ceramic has a brownmillerite structure A₂B₂O_{5-δ}, where A is a divalent cation and B is a trivalent or higher-valent cation, the ionic radius of A is greater than the ionic radius of B and δ is from 0.01 to 0.9, preferably from 0.01 to 0.5 so as to make the material electrically neutral and A and/or B can be present as mixtures of different cations.

14. Composite according to Claim 12 or 13,
**characterized in that** the cations of the type A are selected from among cations of main group II, transition group I, transition group II, the lanthanide group and mixtures of these cations, preferably from among Mg²⁺, Ca²⁺, Sr²⁺, Ba²⁺, Cu²⁺, Ag²⁺, Zn²⁺, Cd²⁺ and lanthanides.

15. Composite according to Claim 12 or 13,
**characterized in that** the cations of type B are selected from among cations of groups IIIB to VIIIB of the Periodic Table and the lanthanide group, the metals of main group V and mixtures of these cations, preferably from among Fe³⁺, Fe⁴⁺, Ti³⁺, Ti⁴⁺, Zr³⁺, Zr⁴⁺, Ce³⁺, Ce⁴⁺, Mn³⁺, Mn⁴⁺, Co²⁺, Co³⁺, Nd³⁺, Nd⁴⁺, Gd³⁺, Gd⁴⁺, Sm³⁺, Sm⁴⁺, Dy³⁺, Dy⁴⁺, Ga³⁺, Yb³⁺, Al³⁺, Bi⁴⁺ and mixtures of these cations.

16. Composite according to Claim 12, **characterized in that** the oxygen-transporting oxide ceramic having a perovskite structure comprises the elements Ba, Sr, Fe, Zn and O or the elements Ba, Co, Fe, Zr and O, in particular an oxide ceramic having the composition BaCoₓFe_{y}Zr_{z}O_{3-δ} where the sum of x, y and z is 1, z is from 0.1 to 0.5, x is in the region of a*y, a is from 0.8 to 1.2 and δ is as defined in Claim 12.

17. Process for producing the composite according to Claim 1, which comprises the measures:
i) production of a green hollow fibre by extrusion of a composition comprising a polymer and a ceramic, in particular an oxide ceramic, or a precursor of a ceramic through a nozzle, preferably an annular nozzle, in a manner known per se,
ii) production of a green composite from one or more of the green hollow fibres produced in step i) by formation of contacts between the outer surface(s) of the green hollow fibre(s), and
iii) thermal treatment of the green composite produced in step ii) in order to remove the polymer, in the case of the use of a precursor of a ceramic in step i) to form the ceramic and to establish the contact between the hollow ceramic fibres.

18. Process according to Claim 17, **characterized in that** the extrusion is carried out according to the dry spinning process, the wet spinning process or the melt spinning process.

19. Process according to Claim 17, **characterized in that** the production of the composite is effected by braiding, twisting, weaving, formed-loop knitting, drawn-loop knitting of the green hollow fibre(s) or by laying green hollow fibres parallel to one another.

20. Process according to Claim 19, **characterized in that** the green hollow fibres are arranged around a rod-shaped reinforcing element or around a tube.

21. Process according to Claim 17, **characterized in that** the thermal treatment of the green composite produced in step ii) is carried out at temperatures in the range from 900 to 1600°C.

22. Process according to Claim 17, **characterized in that** the composite produced in step iii) is joined to, preferably adhesively bonded to, at least one connection element for the introduction or discharge of fluids at at least one end face of the hollow fibre.

23. Process for producing the composite according to Claim 2, which comprises the measures:
i) production of a green hollow fibre by extrusion of a composition comprising a polymer and a ceramic, in particular an oxide ceramic, or a precursor of a ceramic through a nozzle, preferably an annular nozzle, in a manner known per se,
iv) production of a green composite from one or more of the green hollow fibres produced in step i) and at least one connection element for the introduction or discharge of fluids at at least one end face of the green hollow fibres, and
v) thermal treatment of the green composite produced in step iv) in order to remove the polymer, and establish the contact between the hollow ceramic fibres and the at least one connection element and also in the case of the use of a precursor of a ceramic in step i) to form the ceramic, in particular the oxide ceramic.

24. Use of the composite according to any of Claims 1 to 16 for isolating oxygen from oxygen-containing gas mixtures, in particular air.

25. Use of the composite according to any of Claims 1 to 16 for carrying out oxidation reactions, in particular for the catalytic oxidation of organic compounds.

## Revendications

1. Composite, contenant au moins une fibre creuse en un matériau céramique transporteur d'oxygène, qui est un matériau céramique conducteur d'anions oxygène et d'électrons ou une combinaison d'un matériau céramique conducteur d'anions oxygène et d'un matériau céramique ou non céramique conducteur d'électrons, dans lequel la surface extérieure de la fibre creuse se trouve en contact avec la surface extérieure d'une fibre creuse identique ou d'une fibre creuse différente en un matériau céramique transporteur d'oxygène et que les points de contact sont reliés par frittage.

2. Composite, contenant au moins une fibre creuse en un matériau céramique transporteur d'oxygène, qui est un matériau céramique conducteur d'anions oxygène et d'électrons ou une combinaison d'un matériau céramique conducteur d'anions oxygène et d'un matériau céramique ou non céramique conducteur d'électrons, dans lequel, sur au moins une, de préférence sur les deux faces frontales de la fibre creuse, un ou deux éléments de raccordement sont prévus pour l'amenée ou l'évacuation de fluides.

3. Composite selon l'une quelconque des revendications 1 ou 2, **caractérisé en ce que** celui-ci comporte plusieurs fibres creuses tressées ou torsadées les unes avec les autres.

4. Composite selon l'une quelconque des revendications 1 ou 2, **caractérisé en ce que** celui-ci comporte au moins deux fibres creuses, s'étendant parallèlement l'une à l'autre, en matériau céramique transporteur d'oxygène, dont les surfaces périphériques se touchent au moins partiellement le long de leur longueur.

5. Composite selon la revendication 4, **caractérisé en ce que** celui-ci comporte plusieurs fibres creuses ou tubes disposés en forme d'un élément tubulaire multicanaux et s'étendant parallèlement les uns aux autres, dont les surfaces périphériques se touchent au moins partiellement le long de leur longueur.

6. Composite selon la revendication 5, **caractérisé en ce que** les fibres creuses ou les tubes forment la surface d'un élément multicanaux tubulaire, dont l'espace intérieur est creux ou comporte un matériau de renfort en forme de barreau.

7. Composite selon la revendication 6, **caractérisé en ce que** les fibres creuses ou les tubes s'étendent le long de la face intérieure d'un tube en matériau étanche aux gaz, ou poreux.

8. Composite selon la revendication 6, **caractérisé en ce que** l'espace intérieur creux de l'élément tubulaire multicanaux comporte un catalyseur d'oxydation.

9. Composite selon l'une quelconque des revendications 1 ou 2, **caractérisé en ce que** celui-ci comporte une ou plusieurs fibres creuses qui sont tissées, maillées ou tricotées les unes avec les autres.

10. Composite selon l'une quelconque des revendications 1 ou 2, **caractérisé en ce que** le matériau céramique transporteur d'oxygène est une céramique d'oxyde.

11. Composite selon la revendication 10, **caractérisé en ce que** la céramique d'oxyde présente une structure de type pérovskite ou de type brownmillerite ou de type Aurivillius.

12. Composite selon la revendication 11, **caractérisé en ce que** la céramique d'oxyde présente une structure de pérovskite ABO_{3-δ}, A représentant des cations divalents et B des cations trivalents ou de valence supérieure, le rayon ionique de A étant supérieur au rayon ionique de B et δ étant un nombre entre 0,01 et 0,9, de préférence entre 0,01 et 0,5, pour réaliser la neutralité électrique du matériau, et A et/ou B pouvant se présenter comme des mélanges de différents cations.

13. Composite selon la revendication 11, **caractérisé en ce que** la céramique d'oxyde présente une structure de brownmillerite A₂B₂O_{5-δ}, A représentant des cations divalents et B des cations trivalents ou de valence supérieure, le rayon ionique de A étant supérieur au rayon ionique de B et δ étant un nombre entre 0,01 et 0,9, de préférence entre 0,01 et 0,5, pour réaliser la neutralité électrique du matériau, et A et/ou B pouvant se présenter comme des mélanges de différents cations.

14. Composite selon la revendication 12 ou 13, **caractérisé en ce que** les cations du type A sont choisis parmi les cations du deuxième groupe principal, du premier groupe secondaire, du deuxième groupe secondaire, du groupe des lanthanides, ou des mélanges de ces cations, de préférence parmi Mg²⁺, Ca²⁺, Sr²⁺, Ba²⁺, Cu²⁺, Ag²⁺, Zn²⁺, Cd²⁺ et /ou des lanthanides.

15. Composite selon la revendication 12 ou 13, **caractérisé en ce que** les cations du type B sont choisis parmi les cations des groupes IIIB à VIIIB du tableau périodique des éléments et/ou parmi les cations du groupe des lanthanides, des métaux du cinquième groupe principal ou des mélanges de ces cations, de préférence parmi Fe³⁺, Fe⁴⁺, To³⁺, Ti⁴⁺, Zr³⁺, Zr⁴⁺, Ce³⁺, Ce⁴⁺, Mn³⁺, Mn⁴⁺, Co²⁺, Co³⁺, Nd³⁺, Nd⁴⁺, Gd³⁺, Gd⁴⁺, Sm³⁺, Sm⁴⁺, Dy³⁺, Dy⁴⁺, Ga³⁺, Yb³⁺, Al³⁺, Bi⁴⁺ ou des mélanges de ces cations.

16. Composite selon la revendication 12, **caractérisé en ce que** la céramique d'oxyde transporteuse d'oxygène de structure pérovskite comporte les éléments Ba, Sr, Fe, Zn et O ou les éléments Ba, Co, Fe, Zr et O, de préférence la composition BaCoₓFe_{y}Zr_{z}O_{3-δ}, la somme de x, y et z donnant 1, z prenant une valeur entre 0,1 et 0,5, x possédant une valeur dans la plage de a*y, a prenant une valeur entre 0,8 et 1,2 et δ possédant la signification définie dans la revendication 12.

17. Procédé de fabrication du composite selon la revendication 1, comprenant les opérations de :
i) fabrication d'une fibre creuse crue par extrusion d'une composition contenant, outre un polymère, une céramique, en particulier une céramique d'oxyde, ou un précurseur pour une céramique, à travers une filière, de préférence une filière annulaire, de façon connue en soi,
ii) production d'un composite cru en une ou plusieurs des fibres creuses crues fabriquées dans l'étape i) par réalisation de contacts entre la ou les surfaces extérieures de la fibre creuse ou des fibres creuses crues, et
iii) traitement thermique du composite cru produit à l'étape ii) pour éliminer le polymère, pour former une céramique dans le cas de l'emploi à l'étape i) d'un précurseur pour la céramique, et pour former le contact entre les fibres creuses de céramique.

18. Procédé selon la revendication 17, **caractérisé en ce que** l'extrusion s'effectue d'après le procédé de filage à sec, le procédé de filage humide ou le procédé de filage en fusion.

19. Procédé selon la revendication 17, **caractérisé en ce que** la production du composite s'effectue par tressage, torsion, tissage, maillage, tricotage de la ou des fibres creuses crues ou par juxtaposition de fibres creuses crues s'étendant parallèlement les unes aux autres.

20. Procédé selon la revendication 19, **caractérisé en ce que** l'on dispose les fibres creuses crues autour d'un élément de renforcement en forme de barreau ou autour d'un tube.

21. Procédé selon la revendication 17, **caractérisé en ce que** le traitement thermique du composite cru produit dans l'étape ii) s'effectue à des températures dans l'intervalle de 900 à 1600 °C.

22. Procédé selon la revendication 17, **caractérisé en ce que** le composite produit après l'étape iii) est assemblé sur au moins une surface frontale de la fibre creuse, de préférence collé, avec au moins un élément de raccordement pour l'amenée et l'évacuation de fluides.

23. Procédé de fabrication du composite selon la revendication 2, comportant les opérations de :
i) fabrication d'une fibre creuse crue par extrusion d'une composition contenant, outre un polymère, une céramique, en particulier une céramique d'oxyde ou un précurseur pour une céramique, à travers une filière, de préférence une filière annulaire, de façon connue en soi,
iv) production d'un composite cru en une ou plusieurs des fibres creuses crues fabriquées dans l'étape i) et en au moins un élément de raccordement pour l'amenée et l'évacuation de fluides sur au moins une surface frontale des fibres creuses, et
v) traitement thermique du composite cru produit à l'étape iv) pour éliminer le polymère et pour former les contacts entre les fibres creuses de céramique et ledit au moins un élément de raccordement, ainsi que pour former la céramique, en particulier la céramique d'oxyde, dans le cas de l'emploi à l'étape i) d'un précurseur pour la céramique.

24. Utilisation du composite selon l'une quelconque des revendications 1 à 16 pour l'obtention d'oxygène depuis des mélanges de gaz contenant de l'oxygène, en particulier depuis l'air.

25. Utilisation du composite selon l'une quelconque des revendications 1 à 16 pour l'exécution de réactions d'oxydation, en particulier pour l'oxydation catalytique de composés organiques.
